# EUROPÄISCHE PATENTSCHRIFT

(11) **EP 1 188 697 B1**
(45) Veröffentlichungstag und Bekanntmachung des Hinweises auf die Patenterteilung: **24.11.2004**
(21) Anmeldenummer: 01121686.8
(22) Anmeldetag: 14.09.2001
(51) Int. Cl.: B65G 47/64, B65G 47/90, B23Q 7/14, B23P 19/00

(54) **Vorrichtung zur Rückführung von in einer Bearbeitungsanordnung bearbeiteten Werkstücken**
Apparatus for recirculating machined parts in a machining arrangement
Dispositif pour ramener des pièces usinées à la station de départ dans un ensemble d'usinage

(30) Priorität: 19.09.2000 DE 20016186 U
(43) Veröffentlichungstag der Anmeldung: 20.03.2002
(73) Patentinhaber: Ligmatech Automationssysteme GmbH, 09638 Lichtenberg (DE)
(72) Erfinder: Tönnigs, Bodo, 09638 Lichtenberg (DE)
(74) Vertreter: HOFFMANN - EITLE

(56) Entgegenhaltungen:
- EP-A- 0 582 962
- DE-A- 3 539 723
- US-A- 4 599 025
- US-A- 5 238 100

## Beschreibung

### Technisches Gebiet

Die Erfindung betrifft eine Vorrichtung zur Rückführung von in einer Bearbeitungsanordnung bearbeiteten Werkstücken von deren Ausgabeseite zu deren oder einer weiteren Beschickungsseite, mit einer Übernahmeeinrichtung zur Übernahme der die Ausgabeseite der Bearbeitungsanordnung verlassenden Werkstücke, einer Rücklaufeinrichtung, über die die Übernahmeeinrichtung angelieferten Werkstücke zurück zur Beschickungsseite der oder einer weiteren Bearbeitungsanordnung transportiert werden sowie einer Versetzeinrichtung, mit der die Werkstücke von der Übernahmeeinrichtung auf die Rücklaufeinrichtung transportiert werden.

Bei der Bearbeitung von Werkstücken, vorzugsweise plattenförmigen, streifenförmigen oder leistenförmigen Werkstücken, die insbesondere aus Holz, Holz ähnlichen Werkstoffen oder Kunststoffen aufgebaut sind, ist es oftmals notwendig, die Bearbeitung eines Werkstücks an einer Bearbeitungsanordnung mehrmals durchzuführen. Unter einer Bearbeitungsanordnung werden hier vornehmlich eine oder mehrere Bearbeitungsstationen oder sogenannte Durchlaufmaschinen verstanden. Bei Durchlaufmaschinen werden jeweils an einer Seitenkante des Werkstücks verschiedene Bearbeitungsvorgänge in einem Durchlauf durchgeführt.

Eine derartige Bearbeitung der Seitenkanten eines Werkstücks ist z.B. bei Möbelteilen oder Küchenfronten nötig, die an allen vier Seitenkanten bzw. Randbereichen bearbeitet werden müssen um beispielsweise eine Kante aufzuleimen und zu bearbeiten. Da diese Maschinen meist eine größere Längserstreckung aufweisen, ist es erforderlich, die Werkstücke zur Beschickungsseite zurückzuführen.

### Stand der Technik

Die einfachste Möglichkeit zur Rückführung der Werkstücke besteht darin, an beiden Enden der Bearbeitungsmaschine jeweils einen Bediener abzustellen, wobei der eine auf der Beschickungsseite die Werkstücke einlegt und der andere an der Ausgabeseite der Maschine die bearbeiteten Werkstücke abnimmt und einzeln oder in Stapeln zur Beschickungsseite per Hand zurücktransportiert. Ein solches Vorgehen ist kostenwie zeitintensiv und verhindert die optimale Auslastung der Bearbeitungsanordnung.

Ferner sind Rückführvorrichtungen bekannt, die einen Ein-Mann-Betrieb an Bearbeitungsmaschinen mit einer entsprechenden Rückführvorrichtung ermöglichen, indem die Werkstücke zum Bediener an der Beschickungsseite von einer Rückführvorrichtung zurückgeführt werden. Bei derartigen bekannten Bearbeitungsmaschinen mit Rückführvorrichtung werden die Werkstücke in der Regel von dem Bediener manuell von Hand in die Bearbeitungsmaschine eingeführt. Nach der Bearbeitung der Werkstücke werden die Werkstücke automatisch von der Rückführvorrichtung übernommen, zur Seite transportiert und anschließend zur Beschickungsseite der Bearbeitungsvorrichtung zurücktransportiert. Dort werden die Werkstücke von dem Bedienpersonal manuell von der Rückführvorrichtung entnommen, um die Werkstücke wiederum der Beschickungsseite der Bearbeitungsvorrichtung von Hand zuzuführen.

So sind Rückführvorrichtungen bekannt, die an der Ausgabeseite der Bearbeitungsmaschine eine schräge Rollenbahn oder eine schräg angestellte Luftkissenanordnung zum Querversatz der Werkstücke aufweisen. Daran anschließend werden die quer versetzten Werkstücke von einer Band- oder Rollenbahn zur Beschickungsseite zurückgeführt.

Ferner ist eine Rückführeinrichtung bekannt (vgl. DE-Gbm 9 307 220.1), bei der die Werkstücke nach der Bearbeitung an der Ausgabeseite der Bearbeitungsmaschine durch eine Hubeinrichtung in eine über die Ausgabehöhe liegende Rückführposition angehoben. Aus dieser angehobenen Rückführposition werden die Werkstücke auf einer schräg gestellten Rücklaufbahn unter Ausnutzung der Schwerkraft zur Beschickungsseite der Bearbeitungsvorrichtung zurücktransportiert.

Darüber hinaus ist es zur Fertigungsautomation in der Leiterplattenindustrie bekannt (vergl. DE-35 39 723), Werkstücke in Form von Leiterplatten nach Verlassen einer Bearbeitungsanordnung zu einer Übernahmeeinrichtung zu überführen, die von einer Anzahl von in Transportrichtung verlaufenden und im Abstand zueinander angeordneten Förderbändern gebildet ist. Von diesen Förderbändern werden die Werkstücke über eine Rechenanordnung abgehoben, seitlich versetzt und auf eine angetriebene Walzen aufweisenden Rücklaufeinrichtung abgesetzt.

Bekannte Rückführvorrichtungen für Bearbeitungsmaschinen sind je nach Ausstattung und Funktionalität relativ teuer und weisen deshalb im Vergleich zur Bearbeitungsanordnung ein ungünstiges Preisleistungsverhältnis auf. Auch ist es bei hoher Funktionalität erforderlich, dass aufwendige elektronische Einrichtungen zur Steuerung des Durchlaufs der Werkstücke zwischen der Bearbeitungsmaschine und der Rückführvorrichtung vorgesehen werden. Dadurch ist die Komplexität der Bearbeitungsvorrichtung und Rückführvorrichtung je nach Ausstattung relativ hoch.

### Darstellung der Erfindung

Der Erfindung liegt das technische Problem zugrunde, eine Vorrichtung zur Rückführung von in einer Bearbeitungsanordnung bearbeiteten Werkstücken von deren Ausgabeseite zu deren oder einer weiteren Beschickungsseite zu schaffen, welche eine ausreichende Taktleistung ermöglicht und kostengünstig herstellbar ist.

Dieses technische Problem wird durch eine Vorrichtung mit den Merkmalen des Anspruchs 1 gelöst.

Der Erfindung liegt der Gedanke zugrunde, eine Rückführvorrichtung mit einem einfachen Aufbau zu schaffen, wobei die Steuerung und Taktleistung der Werkstücke im Durchlauf durch einfache mechanische Elemente zur Kostenreduzierung vorgegeben ist.

Bei dem neuartigen Konzept werden die Werkstücke nach der Bearbeitung in der Bearbeitungsmaschine von der Übernahmeeinrichtung an der Ausgabeseite durch die angetriebenen Walzen übernommen, wobei die Auflageleisten der Versetzeinrichtung zwischen den Walzen nach oben angehoben werden, wenn sich das Werkstück auf den Walzen befindet. Nach dem Anheben des Werkstücks über die Walzen werden die Auflageleisten mit dem Werkstück zur Rücklaufeinrichtung seitlich versetzt und auf dieser durch eine Bewegung der Auflageleisten nach unten abgesetzt. Die Rücklaufeinrichtung weist erfindungsgemäß einen Rücktransporttisch zur Aufnahme der Werkstücke auf, der von einer Anzahl von in einem vorgegebenen Abstand zueinander und mit den Walzen der Übernahmeeinrichtung ausgerichteten Ausnahmewalzen gebildet ist. Sind die Werkstücke auf diesem Rücktransporttisch abgesetzt worden, werden die Auflageleisten zwischen den Aufnahmewalzen des Rücktransporttisches hindurch weiter abgesenkt. Daraufhin werden die Werkstücke von der Rücklaufeinrichtung zurück zur Beschickungsseite der oder einer weiteren Bearbeitungsanordnung transportiert. Nachdem die Auflageleisten das Werkstück auf die Rücklaufeinrichtung abgesetzt haben, werden diese unterhalb der Walzen zur Beschickungsseite zurücktransportiert, um anschließend daran erneut ein Werkstück zwischen den Walzen nach oben anzuheben und den vorstehend beschriebenen Vorgang fortzusetzen. Durch den Rücktransport der Auflageleisten von der Rücklaufeinrichtung unterhalb der Walzen zur Beschickungsseite kann die Taktleistung der Rückführvorrichtung und somit der Durchlauf der Werkstücke durch die gesamte Vorrichtung erhöht werden, da weitere Werkstücke bereits auf die Übernahmeeinrichtung einlaufen können, sobald die Rechenanordnung bzw. die Auflageleisten den Ausgabebereich der Bearbeitungsmaschine verlassen hat.

Somit wird durch den Eingriff der Rechenanordnung durch die Walzen und das daran anschließende Anheben und Versetzen der auf den Auflageleisten der Rechenanordnung angeordneten Werkstücke zur Rücklaufeinrichtung eine kostengünstige Rückführvorrichtung bereitgestellt. Die erfindungsgemäße Vorrichtung ist daher insbesondere für das Handwerk geeignet, wobei gewisse Einschränkungen der Funktionalität durch das günstige Preisleistungsverhältnis ausgeglichen werden.

Weitere vorteilhafte Ausgestaltungen ergeben sich aus den Unteransprüchen. So weist die Versetzeinrichtung in vorteilhafter Art und Weise zum Auf- und Abbewegen der Auflageleisten eine pneumatische oder hydraulische Hubeinrichtung auf, durch welche die Werkstücke somit von der Übernahmeeinrichtung anhebbar und auf die Rücklaufeinrichtung absenkbar sind. Durch die Hubeinrichtung können die Werkstücke von den Walzen abgehoben werden und daraufhin in einfacher Art und Weise auf die Rücklaufeinrichtung abgesetzt werden.

Ferner ist es von Vorteil, dass die Versetzeinrichtung zum hin- und herschieben der Auflageleisten in Walzenachsrichtung eine pneumatische oder hydraulische Linieartransporteinrichtung aufweist, durch welche die Werkstücke von der Übernahmeeinrichtung zur Rücklaufeinrichtung quer versetzbar sind. Folglich wird der Transport der Werkstücke durch die Versetzeinrichtung einerseits von einer Hubeinrichtung und andererseits von einer Lineartransporteinrichtung vorgenommen, wodurch der Transport der Werkstücke in den einzelnen Richtungen unabhängig voneinander vorgenommen und in geeigneter Weise kombiniert werden kann.

Gemäß einer weiteren bevorzugten Ausführungsform weist die Versetzeinrichtung zum Hin- und Herverschieben der Auflageleisten in Walzenachsrichtung einen Kurbeltrieb auf, durch welchen die Werkstücke von der Übernahmeeinrichtung zur Rücklaufeinrichtung quer versetzbar sind. Dadurch ist eine vereinfachte Konstruktion der Versetzeinrichtung durch Verwendung eines herkömmlichen Antriebsmotors möglich, wobei der Kurbeltrieb für eine Umwandlung der Drehbewegung in eine translatorische Bewegung sorgt. Ferner ermöglicht der Kurbeltrieb aufgrund der kontinuierlichen Umwandlung der Drehbewegung in eine Längsbewegung für den Transport der Werkstücke keine aufwendige Elektronik, um die Versetzeinrichtung mit den von der Bearbeitungsmaschine kommenden Werkstücke zur Steigerung der Durchlaufgeschwindigkeit zu synchronisieren.

Darüber hinaus ist es vorteilhaft, wenn die Versetzeinrichtung mit der Übernahmeeinrichtung synchronisiert ist, wodurch die Taktleistung der gesamten Vorrichtung weiter erhöht werden kann, da der Durchlauf der Werkstücke von der Bearbeitungsmaschine zur Übernahmeeinrichtung und von dort zur Versetzeinrichtung aufeinander abgestimmt ist, um ein Kollidieren einzelner Werkstücke zu vermeiden.

Gemäß einer vorteilhaften Ausführungsform weist der Kurbeltrieb eine angetriebene Drehachse auf, an der eine Kurbel drehbar angebracht ist, wobei ein freies Ende der Kurbel mit den Auflageleisten zu deren Verschiebung in Walzenachsrichtung zusammenwirkt. Aufgrund der Übertragung der Drehbewegung des freien Endes der Kurbel auf die Auflageleisten der Rechenanordnung kommt es in besonders vorteilhafter Art und Weise zu einem sanften Anlauf der Auflageleisten, wodurch verhindert wird, dass sich die auf den Auflageleisten befindlichen Werkstücke aufgrund ihrer Trägheit auf diesen verschieben bzw. von diesen herunterfallen. Anschließend an diesen sanften Anlauf wird in der Mitte der Versetzung zwischen der Übernahmeeinrichtung und der Rücklaufeinrichtung durch den Kurbeltrieb eine Beschleunigung und somit eine hohe Transportgeschwindigkeit der Werkstücke erreicht, um eine vorteilhafte Taktleistung der Rückführvorrichtung trotz eines sanften Anfahrens aufrecht zu erhalten.

Daraufhin werden die Werkstücke am Ende des Transportwegs zur Rücklaufeinrichtung wiederum aufgrund des Kurbeltriebs sanft abgebremst, so dass die Werkstücke sicher auf der Rücklaufeinrichtung abgesetzt werden können. Somit gewährleistet der Kurbeltrieb ein sanftes Anfahren mit einer darauf folgenden hohen Transportgeschwindigkeit sowie einer anschließenden sanften Abbremsung der auf den Ablageleisten angebrachten Werkstücken während des Transports durch die Versetzeinrichtung, ohne dass eine aufwendige Steuerung elektrischer, pneumatischer oder hydraulischer Art oder auch eine kombinierte Steuerung erforderlich ist. Folglich wird durch den Kurbeltrieb mit einfachen mechanischen Mitteln ein besonders vorteilhaftes Transportprofil für die Werkstücke ermöglicht, wobei der Geschwindigkeitsverlauf der Werkstücke durch die Bewegungsumwandlung einer Drehung in eine reziproke Längsbewegung der Sinus bzw. Kosinus Funktion entspricht.

Gemäß einer Ausführungsform ist das freie Ende der Kurbel in einer in Walzenachsrichtung verschiebbaren Fahrschiene geführt, deren Längsachse insbesondere senkrecht zur Drehachse verläuft.

Ferner ist es von Vorteil, wenn die Fahrschiene im Wesentlichen quer zur Walzenachsrichtung verläuft und durch zwei im Wesentlichen in Walzenachsrichtung verlaufende Führungsschienen verschiebbar geführt ist. Somit ist durch die geführte Fahrschiene ein fest vorbestimmter Weg für die mit dem freien Ende der Kurbel zusammenwirkenden Auflageleisten vorgegeben, so dass die Werkstücke über einen definierten Weg von einer vorbestimmten Position der Übernahmeeinrichtung zu einer vorbestimmten Position der Rücklaufeinrichtung transportiert werden.

Vorteilhafterweise trägt das freie Ende der Kurbel eine Rolle, die in Längsrichtung in der Fahrschiene verfahrbar ist. Dadurch vermindert sich die Reibung zwischen dem Kurbelende und der Fahrschiene, so dass sich der Wirkungsgrad der Vorrichtung erhöht.

Darüber hinaus ist es von Vorteil, wenn die Fahrschiene gehärtete Leisten zur Aufnahme des freien Endes der Kurbel aufweist, welche insbesondere eingeklebt sind. Aufgrund der gehärteten Leisten vermindert sich der Abrieb zwischen den bewegten Teilen, um die Lebensdauer der Vorrichtung zu erhöhen. Ferner kann die Montage der Leisten durch deren Einkleben in die Fahrschiene vereinfacht werden.

Gemäß einer vorteilhaften Ausführungsform sind die Auflageleisten der Rechenanordnung an einem Traversträger angebracht, der insbesondere quer zu den Aufnahmeleisten verläuft. Da alle Auflageleisten lediglich an einem Traversträger angebracht sind, ist die Versetzung des Traversträgers sowohl in horizontaler als auch in vertikaler Richtung mittels der Versetzeinrichtung ausreichend. Wenn der Traversträger quer zu den Aufnahmeleisten verläuft, ist die Ausrichtung mit den Walzen, der Fahrschiene sowie der Führungsschienen geometrisch und konstruktiv einfach durchzuführen.

Ferner ist es von Vorteil, wenn die Hubeinrichtung mit dem Traversträger im Eingriff ist, um das Anheben und Absenken der Auflageleisten in einfacher Art und Weise gleichzeitig durchzuführen.

Wenn die Hubeinrichtung an der Fahrschiene angebracht ist, kommt es somit zu einer vorteilhaften Überlagerung der horizontalen und vertikalen Bewegung der Auflageleisten mit einem minimalen Aufwand an strukturellen Elementen.

Vorzugsweise sind die Aufnahmeleisten in vertikaler Richtung von dem Traversträger beabstandet, so dass die Aufnahmeleisten über die Übernahmeeinrichtung nach oben angehoben werden können, wobei der Traversträger und die Krafteinleitung durch die Versetzeinrichtung an den Traversträger gleichzeitig während des Transports der Werkstücke zur Rücklaufeinrichtung unterhalb der Walzen vorgenommen werden kann. Folglich kann die Versetzeinrichtung nicht mit den Werkstücken oder anderen Elementen bei dem Transport der Werkstücke zur Rücklaufeinrichtung in Konflikt geraten.

Wenn die Aufnahmewalzen des Rücktransporttisches angetrieben sind, kann der Rücktransport der Werkstücke zur Beschickungsseite unmittelbar fortgesetzt werden, da sich der Transporttisch bevorzugterweise in ständiger Bewegung befindet. Darüber hinaus ist es vorteilhaft, dass ein Antriebsmotor vorgesehen ist, welcher sowohl die Walzen der Übernahmeeinrichtung als auch die Aufnahmewalzen des Rücktransporttisches antreibt. Somit kann eine weitere Kostenreduzierung vorgenommen werden, da lediglich ein Motor notwendig ist.

Gemäß einer bevorzugten Ausführungsform treibt der Antriebsmotor die Walzen der Übernahmeeinrichtung und die Aufnahmewalzen des Rücktransporttisches über Antriebsräder mit unterschiedlichem Durchmesser an. Folglich können unterschiedliche Geschwindigkeiten der Walzen für die Übernahmeeinheit und den Transporttisch realisiert werden.

Bevorzugterweise ist die Antriebsgeschwindigkeit der Walzen des Transporttisches für den Rücklauf etwas schneller, um eine Lücke zwischen den einzelnen Werkstücken auf der Rücklaufeinrichtung zu schaffen, wenn die nachfolgenden Werkstücke quer zur Rücklaufeinrichtung gefördert werden. Somit kann eine Kollision der Werkstücke auf der Rücklaufeinrichtung vermieden werden und die Taktleistung der Rückführvorrichtung kann weiter erhöht werden.

Gemäß einer vorteilhaften Ausführungsform sind die Walzen der Übernahmeeinrichtung und die Aufnahmewalzen des Rücktransporttisches über um 90° versetzte, an Antriebswellen angebrachte Riemen angetrieben. Durch den Riemenantrieb der Walzen kann eine schnelle und problemlose Montage vorgenommen werden, insbesondere wenn die Aufnahmeachsen der Walzen zum Einlegen und Herausnehmen in die vorgegebene Position durch eine Feder gelagert sind, die während der Montage entgegen der Federkraft betätigt werden muss. Dies ist insbesondere vorteilhaft, wenn die Walzen in eine vorgefertigte Wanne montiert werden, in welcher bevorzugterweise die strukturellen Elemente der Übernahmeeinrichtung, der Versetzeinrichtung sowie der Rücklaufeinrichtung untergebracht sind.

Wenn der Rücktransporttisch zumindest um die maximale Werkstückdicke unterhalb der Übernahmeeinrichtung angebracht ist, können auch weitere Werkstücke sowohl während der Bearbeitung als auch während des Rücklaufs zur Beschickungsseite leicht überlappend übereinander transportiert werden, ohne dass der Transport durch breitere bzw. überhängende Werkstücke gestört wird.

Gemäß weiterer vorteilhafter Ausführungsformen schließt sich an den Rücktransporttisch eine angetriebene oder nicht angetriebene Rücklaufbahn an, so dass die Werkstücke beispielsweise über ein Transportband oder nicht angetriebene Rollen zum Bediener zurückgeführt werden können.

Ferner ist es vorteilhaft, wenn sich an den Rücktransporttisch eine weitere Bearbeitungsanordnung zur Bearbeitung der Werkstücke anschließt, wobei insbesondere eine Ausrichteinrichtung für die Zuführung der Werkstücke zur weiteren Bearbeitungsanordnung in einer geeigneten Position vorgesehen ist. Somit können die Werkstücke unmittelbar anschließend an einer weiteren Seite bzw. Kante bearbeitet werden.

Gemäß einer weiteren vorteilhaften Ausführungsform umfasst die angetriebene Rücklaufbahn ein Transportband, welches über eine Trommelmotor angetrieben ist. Dadurch ist es möglich, dass der Trommelmotor gleichzeitig als Antrieb und als Lager für das Transportband verwendet wird. Somit wird gegenüber den gebräuchlichen Antrieben mittels Getriebemotor und Zugmittelantrieb als Zwischenstufe ein Großteil an Montagezeit eingespart und ferner verringern sich die Leistungsverluste im Antrieb. Zusätzlich vermindert sich die Störanfälligkeit aufgrund der durch den Trommelmotor geringen Anzahl von Elementen für den Antrieb.

Wenn die Auflageleisten eine Schicht aus Gummi oder Filz zur Aufnahme der Werkstücke aufweisen, kann eine Beeinträchtigung bzw. ein Verkratzen der Oberflächen der Werkstücke in einfacher Art und Weise vermieden werden.

Darüber hinaus ist es vorteilhaft, wenn die Auflageleisten eine quer zur Walzenachsrichtung verlaufenden Anschlag für die Werkstücke aufweisen, um ein Verschieben bzw. Abgleiten der Werkstücke auf bzw. von den Auflageleisten während des Transports zur Rücklaufeinrichtung zu verhindern.

Außerdem kann durch die Demontage der Füße der Transportbandeinrichtung, wobei ein relativ schlanker, funktionsfähiger Bandkörper entsteht, das Transportvolumen der Vorrichtung zum Ort der Montage hin um ein Vielfaches gesenkt werden.

### Kurze Beschreibung der Zeichnungen

Im Folgenden ist zur weiteren Erläuterung und zum besseren Verständnis ein Ausführungsbeispiel der Erfindung unter Bezugnahme auf die beigefügten Zeichnungen näher beschrieben und erläutert. Es zeigt:
- Fig. 1: eine perspektivische Ansicht einer Bearbeitungsmaschine mit einer erfindungsgemäßen Vorrichtung zur Rückführung von in der Bearbeitungsmaschine bearbeiteten Werkstücken;
- Fig. 2: eine Draufsicht der erfindungsgemäßen Vorrichtung zur Rückführung von bearbeiteten Werkstücken;
- Fig. 3: eine schematische Seitenansicht der Versetzeinrichtung der erfindungsgemäßen Vorrichtung zur Rückführung von bearbeiteten Werkstücken;
- Fig. 4: eine schematische Draufsicht der erfindungsgemäßen Versetzeinrichtung von Fig. 3; und
- Fig. 5: eine Vorderansicht der erfindungsgemäßen Versetzeinrichtung von Fig. 3.

### Beschreibung einer bevorzugten Ausführungsform der Erfindung

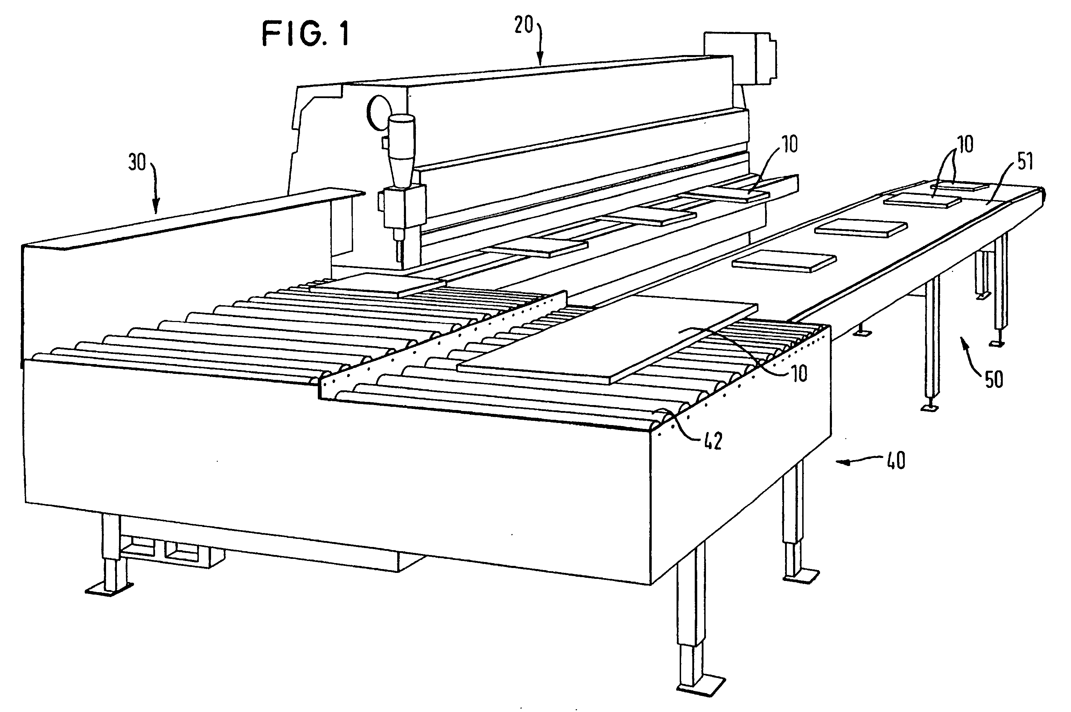

In Fig. 1 ist eine erfindungsgemäße Vorrichtung zur Rückführung von Werkstücken 10 von der Ausgabeseite einer Bearbeitungsmaschine 20 zu deren Beschickungsseite gezeigt. Die erfindungsgemäße Rückführvorrichtung ist an der Ausgabeseite der Bearbeitungsmaschine 20 angeordnet, wobei sich eine Übernahmeeinrichtung 30 unmittelbar an die Ausgabeseite der Bearbeitungsmaschine 20 anschließt. Nachdem die Werkstücke 10 im Durchlauf in der Bearbeitungsmaschine 20 vorzugsweise zur Kantenumleimung bearbeitet worden sind, werden die die Bearbeitungsmaschine 20 an der Ausgabeseite verlassenden Werkstücke 10 von der Übernahmeeinrichtung 30 aufgenommen.

Daraufhin werden die Werkstücke 10 durch eine in Fig. 1 nicht gezeigte Versetzeinrichtung 60 zu einer Rücklaufeinrichtung 40 transportiert, wobei die Werkstücke 10 auf dem Rücktransporttisch 42 abgelegt bzw. abgesetzt werden. Dieser Rücktransporttisch 42 ist zumindest um die maximale Dicke der Werkstücke 10 unterhalb der Übernahmeeinrichtung 30 angeordnet, um eine Kollision der in der Bearbeitungsmaschine 20 befindlichen Werkstücke 10 mit den im Rücklauf befindlichen Werkstücken 10 zu vermeiden.

An den Rücktransporttisch 42 schließt sich eine Rücklaufbahn 50 an. Die Rücklaufbahn 50 weist ein Transportband 51 auf, welches insbesondere über einen nicht gezeigten Trommelmotor angetrieben ist. Das Transportband 51 verläuft im Wesentlichen parallel zur Durchlaufrichtung der Werkstücke 10 der Bearbeitungsmaschine 20. Ferner endet das Transportband 51 im Wesentlichen im Bereich der Beschickungsseite der Bearbeitungsmaschine 20, so dass ein Bedienpersonal gleichzeitig die Werkstücke 10 in die Bearbeitungsmaschine 20 einlegen kann und nach deren Durchlauf und Rücktransport durch die Rückführvorrichtung diese Werkstücke 10 von dem Transportband 51 abnehmen kann. Daraufhin können diese Werkstücke wieder zur Bearbeitung einer weiteren Seite in die Bearbeitungsmaschine 20 eingelegt werden.

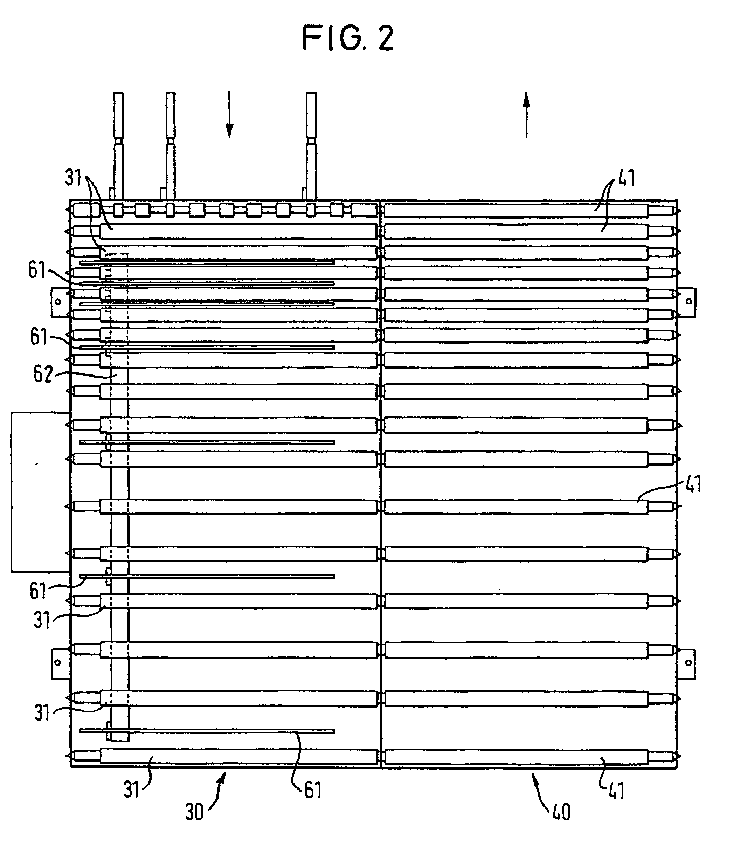

In Fig. 2 ist eine Draufsicht auf die Übernahmeeinrichtung 30 und die Rücklaufeinrichtung 40 dargestellt. Gemäß der Pfeilrichtung werden die Werkstücke von der Bearbeitungsmaschine 20 auf die Übernahmeeinrichtung 30 gefördert, die aus einer Vielzahl von im Wesentlichen quer zur Transportrichtung der Bearbeitungsmaschine 20 ausgerichteten Walzen 31 aufgebaut ist. Die Walzen 31 sind in einem vorgegebenen Abstand zueinander angeordnet, welcher von der Ausgabeseite der Bearbeitungsmaschine 20 beginnend, wahlweise zunimmt. Durch die Zunahme der Abstände der Walzen können einerseits kleine Werkstücke unmittelbar am Anfang der Übernahmeeinrichtung 30 aufgenommen und weiter transportiert werden, und andererseits können längere Werkstücke auf der Übernahmeeinrichtung 30 aufgenommen werden, die keinen engen Abstand der benachbarten Walzen für eine stabile Auflage benötigen.

Zwischen den Walzen 31 sind eine Vielzahl von Auflageleisten 61 angeordnet, welche die Zinken einer Rechenanordnung darstellen. Diese Auflageleisten 61 der Rechenanordnung sind Bestandteil der Versetzeinrichtung 60, mit der die Werkstücke 10 von der Übernahmeeinrichtung 30 auf die Rücklaufeinrichtung 40 transportiert werden. Die einzelnen Auflageleisten 61 sind dabei an einem gemeinsamen Traversträger 62 angebracht.

Die neben der Übernahmeeinrichtung 30 angeordnete Rücklaufeinrichtung 40 ist aus einer Vielzahl von in einem vorgegebenen Abstand zueinander und mit den Walzen 61 der Übernahmeeinrichtung 30 ausgerichteten Aufnahmewalzen 41 gebildet. Die Aufnahmewalzen 41 können von einem nicht dargestellten Antriebsmotor angetrieben werden, welcher sowohl die Walzen 31 der Übernahmeeinrichtung 30 als auch die den Rücktransporttisch 42 bildenden Aufnahmewalzen 41 der Rücklaufeinrichtung 40 antreibt.

Nachdem die Werkstücke 10 von der Ausgabeseite der Bearbeitungsmaschine 20 auf die Übernahmeeinrichtung 30 gefördert worden sind, werden die auf dem Traversträger 62 angebrachten Auflageleisten 61 zwischen den Walzen 31 nach oben angehoben, um die Werkstücke 10 von den Walzen 31 abzuheben. Daraufhin verfahren die Auflageleisten 61 das Werkstück 10 in horizontaler Richtung zur Rücklaufeinrichtung 40. Dort werden die Werkstücke durch das Absenken der Auflageleisten 61 zwischen den Aufnahmewalzen 41 auf diesen abgesetzt, so dass die sich nun auf dem Rücktransporttisch 42 der Rücklaufeinrichtung 40 befindlichen Werkstücke in Pfeilrichtung zur Beschickungsseite der Bearbeitungsmaschine 20 beispielsweise über das sich in Fig. 1 anschließende Transportband 51 zurückgeführt werden können.

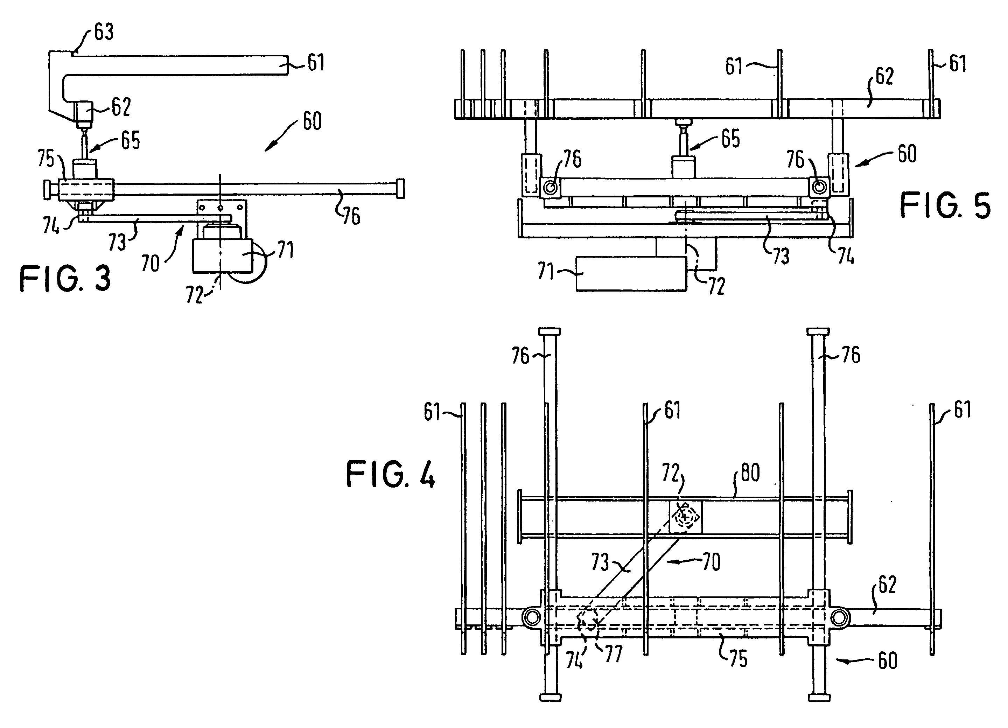

In den Figuren 3 bis 5 wird nun der Aufbau und die Funktion der Versetzeinrichtung 60 näher erläutert. Die die Werkstücke 10 tragenden Auflageleisten 61 weisen einen Anschlag 63 auf, um eine Heruntergleiten der Werkstücke 10 zu vermeiden. Ferner kragen die Aufnahmeleisten 61 nach unten aus, um an deren unterem Ende in geeigneter Weise an dem gemeinsamen Traversträger 62 angebracht zu werden. An dem Traversträger 62 greift von unten eine Hubeinrichtung 65 an, welche bevorzugt einen hydraulischen oder pneumatischen Hubzylinder aufweist. Durch diese Hubeinrichtung werden die Auflageleisten 61 auf und ab bewegt, um die Werkstücke von der Übernahmeeinrichtung 30 nach oben abzuheben und auf die Rücklaufeinrichtung nach unten abzusetzen.

Im Folgenden wird nun das Hin- und Herverschieben der Auflageleisten in Walzenachsrichtung bzw. in horizontaler Richtung beschrieben, wodurch die Werkstücke 10 mittels der Aufnahmeleisten 61 von der Übernahmeeinrichtung 30 zur Rücklaufeinrichtung 40 quer versetzt werden. Ein Kurbeltrieb 70 weist eine von einem Motor 71 angetriebene Drehachse 72 auf, an der eine Kurbel 73 drehbar angebracht ist. Die Drehachse 72 ist durch ein Gestell 80 ortsfest angebracht, an dem bevorzugt auch der Motor 71 gegebenenfalls mit einem Getriebe befestigt ist. Ein freies Ende 74 der Kurbel 73 ist in einer verschiebbaren Fahrschiene 75 geführt. Die Fahrschiene 75 verläuft im Wesentlichen quer zur Achsrichtung der Walzen 31, 41 und ist durch zwei in Walzenachsrichtung verlaufende Führungsschienen 76 verschiebbar geführt. Somit wird die Fahrschiene 75 entlang den Führungsschienen 76 quer zur Transportrichtung der Bearbeitungsmaschine 20 und der Rücklaufeinrichtung 40 verschoben.

Das freie Ende 74 der Kurbel 73 trägt eine Rolle 77, die in Längsrichtung in der Fahrschiene 75 verfahrbar ist. Hierzu weist die Fahrschiene 75 gehärtete Leisten zur Aufnahme des freien Endes 74 der Kurbel 73 auf, die insbesondere eingeklebt sind. Die Rolle 77 der Kurbel 73 läuft aufgrund der Drehung der Kurbel 73 in der Fahrschiene 75 auf und ab, wobei gleichzeitig die Fahrschiene 75 entlang der Führungsschienen 76 in horizontaler Richtung verschoben wird. Somit sorgt der Kurbeltrieb 70 für eine Bewegungsumwandlung der Drehbewegung der Kurbel 73 in eine hin und her bewegende bzw. reziproke Längsbewegung der Fahrschiene 75.

Da die Hubeinrichtung 65 an der Fahrschiene 75 angebracht ist, kommt es in vorteilhafter Art und Weise zu einer Überlagerung der vertikalen Bewegung der Hubeinrichtung 65 und der horizontalen Bewegung der Fahrschiene 75. Somit ist es wie im Folgenden beschrieben möglich, dass die auf den Auflageleisten 61 befindlichen Werkstücke 10 durch ein Zusammenwirken der Hubeinrichtung 65 und des Kurbeltriebs 70 von der Übernahmeeinrichtung 30 auf die Rücklaufeinrichtung 40 versetzt werden. Dabei werden die Auflageleisten 61 zwischen den Walzen 31 durch die Hubeinrichtung 65 angehoben, wenn sich das Werkstück 10 auf den Walzen 31 der Übernahmeeinrichtung 30 befindet. Nach dem Anheben des Werkstücks 10 über die Walzen 31 hinaus werden die Auflageleisten 61 mit dem Werkstück 10 durch den Kurbeltrieb 70 zum Rücktransporttisch 42 quer versetzt und auf diesen durch die Hubeinrichtung 65 von den Auflageleisten 61 nach unten auf die Aufnahmewalzen 41 abgesetzt, wobei die Auflageleisten 61 zwischen den Aufnahmewalzen 41 hindurch nach unten abgesenkt werden. Anschließend daran werden die Auflageleisten 61 unterhalb der Aufnahmewalzen 41 und unterhalb der Walzen 31 durch den Kurbeltrieb 70 zur Übernahmeeinrichtung 30 zurückgefördert, so dass der beschriebene Vorgang zum Transport der Werkstücke von der Übernahmeeinrichtung 30 zur Rücklaufeinrichtung 40 wiederholt werden kann.

Durch den Rücktransport der Auflageleisten 61 von der Rücklaufeinrichtung 40 unterhalb der Aufnahmewalzen 41 und unterhalb der Walzen 31 zu der an der Ausgabeseite der Bearbeitungsmaschine 20 angeordneten Übernahmeeinrichtung 30 kann die Taktleistung der erfindungsgemäßen Vorrichtung erhöht werden, da nachfolgende Werkstücke 10 bereits auf die Übernahmeeinrichtung 30 einlaufen können, sobald die Auflageleisten 61 die Übernahmeeinrichtung 30 verlassen haben.

Der Transport der Werkstücke 10 in horizontaler Richtung von der Übernahmeeinrichtung 30 zur Rücklaufeinrichtung 40 wird durch den Kurbeltrieb 70 vorgenommen, wobei die Kurbel 73 in paralleler Ausrichtung zu den Walzen 31 eine fest vorgegebene Position der Auflageleisten 61 definiert, in welcher die Werkstücke 10 aufgenommen werden können. Andererseits definiert die Kurbel 73 in paralleler Ausrichtung mit den Aufnahmewalzen 41 eine fest vorgegebene Position, in welcher die Werkstücke 10 von den Aufnahmeleisten 61 auf die Rücklaufeinrichtung 40 abgesetzt werden. Somit werden die Werkstücke an einer fest vorgegebenen Stelle von den Aufnahmeleisten 61 an der Übernahmeeinrichtung 30 aufgenommen und daraufhin an einer fest vorgegebenen Position auf der Rücklaufeinrichtung 40 abgesetzt, so dass ein weiteres Ausrichten und Verschieben für den Rücktransport der Werkstücke nicht erforderlich ist.

Durch den Kurbeltrieb kommt es bei dieser Querversetzung der Werkstücke 10 darüber hinaus zu einem besonders vorteilhaften Transportprofil, wobei die Werkstücke im Bereich der Übernahmeeinrichtung sanft angefahren werden und daraufhin stark beschleunigt werden. Anschließend daran werden die Werkstücke 10 im Bereich der Rücklaufeinrichtung 40 durch den Kurbeltrieb 70 wiederum sanft abgebremst, um die Werkstücke in geeigneter Weise auf den Rücktransporttisch 42 abzusetzen. Folglich wird durch das vorteilhafte Transportprofil der Querversetzung der Werkstücke ein Heruntergleiten bzw. eine Fehlposition der Werkstücke auf der Rücklaufeinrichtung verhindert.

Alternativ zu dem besonders vorteilhaften Kurbeltrieb kann jedoch auch eine pneumatische oder hydraulische lineare Transporteinrichtung, beispielsweise ein Hubzylinder, zum Versetzen der Werkstücke in horizontaler Richtung verwendet werden.

## Patentansprüche

1. Vorrichtung zur Rückführung von in einer Bearbeitungsanordnung (20) bearbeiteten Werkstücken (10) von deren Ausgabeseite zu deren oder einer weiteren Beschickungsseite, mit
- einer Übernahmeeinrichtung (30) zur Übernahme der die Ausgabeseite der Bearbeitungsanordnung (20) verlassenden Werkstücke (10),
- einer Rücklaufeinrichtung (40), über die die über die Übernahmeeinrichtung angelieferten Werkstücke (10) zurück zur Beschickungsseite der oder einer weiteren Bearbeitungsanordnung (20) transportiert werden,
- sowie einer Versetzeinrichtung (60), mit der die Werkstücke (10) von der Übernahmeeinrichtung (30) auf die Rücklaufeinrichtung (40) transportiert werden,
**dadurch gekennzeichnet, dass**
die Übernahmeeinrichtung (30) von einer Anzahl von in einem vorgegebenen Abstand zueinander und im Wesentlichen quer zur Transportrichtung ausgerichteten, angetriebenen Walzen (31) und die Versetzeinrichtung (60) von einer Rechenanordnung gebildet sind, deren Zinken von mindestens zwei jeweils zwischen benachbarten Walzen (31) auf- und abbewegbaren, sowie in Walzenachsrichtung hin- und herverschiebbaren Auflageleisten (61) für die Werkstücke (10) gebildet sind, dass die Rücklaufeinrichtung (40) einen Rücktransporttisch (42) zur Aufnahme der Werkstücke (10) von der Versetzeinrichtung (60) aufweist, der von einer Anzahl von in einem vorgegebenen Abstand zueinander und mit den Walzen (31) der Übernahmeeinrichtung (30) ausgerichteten Aufnahmewalzen (41) gebildet ist und dass die Auflageleisten (61) zwischen den Aufnahmewalzen (41) des Rücktransporttisches (42) hindurch absenkbar sind.

2. Vorrichtung nach Anspruch 1, **dadurch gekennzeichnet, dass** die Versetzeinrichtung (60) zum Auf- und Abbewegen der Auflageleisten (61) eine pneumatische oder hydraulische Hubeinrichtung (65) aufweist, durch welche die Werkstücke (10) von der Übernahmeeinrichtung (30) anhebbar und auf die Rücklaufeinrichtung (40) absenkbar sind.

3. Vorrichtung nach Anspruch 1 oder 2, **dadurch gekennzeichnet, dass** die Versetzeinrichtung (60) zum Hin- und Herschieben der Auflageleisten (61) in Walzenachsrichtung eine pneumatische oder hydraulische Lineartransporteinrichtung aufweist, durch welche die Werkstücke (10) von der Übernahmeeinrichtung (30) zur Rücklaufeinrichtung (40) quer versetzbar sind.

4. Vorrichtung nach Anspruch 1 oder 2, **dadurch gekennzeichnet, dass** die Versetzeinrichtung (60) zum Hin- und Herverschieben der Auflageleisten (61) in Walzenachsrichtung einen Kurbeltrieb (70) aufweist, durch welchen die Werkstücke (10) von der Übernahmeeinrichtung (30) zur Rücklaufeinrichtung (40) quer versetzbar sind.

5. Vorrichtung nach einem der Ansprüche 1 bis 4, **dadurch gekennzeichnet, dass** die Versetzeinrichtung (60) mit der Übernahmeeinrichtung (30) synchronisiert ist.

6. Vorrichtung nach Anspruch 4 oder 5, **dadurch gekennzeichnet, dass** der Kurbeltrieb (70) eine angetriebene Drehachse (72) aufweist, an der eine Kurbel (73) drehbar angebracht ist, wobei ein freies Ende (74) der Kurbel (73) mit den Auflageleisten (61) zu deren Verschiebung in Walzenachsrichtung zusammenwirkt.

7. Vorrichtung nach Anspruch 6, **dadurch gekennzeichnet, dass** das freie Ende (74) der Kurbel (73) in einer in Walzenachsrichtung verschiebbaren Fahrschiene (75) geführt ist.

8. Vorrichtung nach Anspruch 7, **dadurch gekennzeichnet, dass** die Fahrschiene (75) im Wesentlichen quer zur Walzenachsrichtung verläuft und durch zwei im Wesentlichen in Walzenachsrichtung verlaufende Führungsschienen (76) verschiebbar geführt ist.

9. Vorrichtung nach Anspruch 7 oder 8, **dadurch gekennzeichnet, dass** das freie Ende (74) der Kurbel (73) eine Rolle (77) trägt, die in Längsrichtung in der Fahrschiene (75) verfahrbar ist.

10. Vorrichtung nach einem der Ansprüche 7 bis 9, **dadurch gekennzeichnet, dass** die Fahrschiene (75) gehärtete Leisten zur Aufnahme des freien Endes (74) der Kurbel (73) aufweist, welche insbesondere eingeklebt sind.

11. Vorrichtung nach einem der Ansprüche 1 bis 10, **dadurch gekennzeichnet, dass** die Auflageleisten (61) der Rechenanordnung an einem Traversträger (62) angebracht sind, der insbesondere quer zu den Aufnahmeleisten (61) verläuft.

12. Vorrichtung nach Anspruch 11, **dadurch gekennzeichnet, dass** die Hubeinrichtung (65) mit dem Traversträger (62) im Eingriff ist.

13. Vorrichtung nach Anspruch 11 oder 12, **dadurch gekennzeichnet, dass** die Hubeinrichtung (65) an der Fahrschiene (75) angebracht ist.

14. Vorrichtung nach einem der Ansprüche 11 bis 13, **dadurch gekennzeichnet, dass** die Aufnahmeleisten (61) in vertikaler Richtung von dem Traversträger (62) beabstandet sind.

15. Vorrichtung nach Anspruch 1, **dadurch gekennzeichnet, dass** die Aufnahmewalzen (41) des Rücktransporttisches (42) angetrieben sind.

16. Vorrichtung nach Anspruch 15, **dadurch gekennzeichnet, dass** ein Antriebsmotor vorgesehen ist, welcher sowohl die Walzen (31) der Übernahmeeinrichtung (30) als auch die Aufnahmewalzen (41) des Rücktransporttisches (42) antreibt.

## Claims

1. Apparatus for the return of work pieces (10) treated in a treatment assembly (20), from its output side to its or a further supply side, with
- a transfer device (30) for transfer of the work pieces (10) leaving the output side of the treatment assembly (20),
- a return device (40) via which the work pieces (10) delivered via the transfer device are transported back to the supply side of the or a further treatment assembly (20),
- and a moving device (60) with which the work pieces (10) are transported from the transfer device (30) to the return device (40),
**characterised in that** the transfer device (30) is formed by a number of driven rollers (31) aligned at a predetermined distance from each other and substantially transversely to the direction of transport, and the moving device (60) is formed by a rake assembly whose tines are formed by at least two support bars (61) for the work pieces (10) which are movable up and down in each case between adjacent rollers (31) and slidable back and forth in the axial direction of the rollers, **in that** the return device (40) has a return transport table (42) for receiving the work pieces (10) from the moving device (60), which table is formed by a number of receiving rollers (41) aligned at a predetermined distance from each other and with the rollers (31) of the transfer device (30), and **in that** the support bars (61) can be dropped through between the receiving rollers (41) of the return transport table (42).

2. Apparatus according to claim 1, **characterised in that** for moving the support bars (61) up and down the moving device (60) has a pneumatic or hydraulic lifting device (65) by which the work pieces (10) can be lifted off the transfer device (30) and dropped onto the return device (40).

3. Apparatus according to claim 1 or 2, **characterised in that** for sliding the support bars (61) back and forth the moving device (60) has in the axial direction of the rollers a pneumatic or hydraulic linear transport device by which the work pieces (10) can be moved transversely off the transfer device (30) to the return device (40).

4. Apparatus according to claim 1 or 2, **characterised in that** for sliding the support bars (61) back and forth the moving device (60) has in the axial direction of the rollers a crank drive (70) by which the work pieces (10) can be moved transversely off the transfer device (30) to the return device (40).

5. Apparatus according to any of claims 1 to 4, **characterised in that** the moving device (60) is synchronised with the transfer device (30).

6. Apparatus according to claim 4 or 5, **characterised in that** the crank drive (70) has a driven rotary shaft (72) on which a crank (73) is mounted rotatably, wherein a free end (74) of the crank (73) cooperates with the support bars (61) to slide them in the axial direction of the rollers.

7. Apparatus according to claim 6, **characterised in that** the free end (74) of the crank (73) is guided in a running rail (75) slidable in the axial direction of the rollers.

8. Apparatus according to claim 7, **characterised in that** the running rail (75) runs substantially transversely to the axial direction of the rollers and is guided slidably by two guide rails (76) running substantially in the axial direction of the rollers.

9. Apparatus according to claim 7 or 8, **characterised in that** the free end (74) of the crank (73) carries a cylinder (77) which is movable in the longitudinal direction in the running rail (75).

10. Apparatus according to any of claims 7 to 9, **characterised in that** the running rail (75) has hardened bars for receiving the free end (74) of the crank (73), which bars are in particular glued in.

11. Apparatus according to any of claims 1 to 10, **characterised in that** the support bars (61) of the rake assembly are mounted on a traverse support (62) which runs in particular transversely to the receiving bars (61).

12. Apparatus according to claim 11, **characterised in that** the lifting device (65) is in engagement with the traverse support (62).

13. Apparatus according to claim 11 or 12, **characterised in that** the lifting device (65) is mounted on the running rail (75).

14. Apparatus according to any of claims 11 to 13, **characterised in that** the receiving bars (61) are spaced apart from the traverse support (62) in a vertical direction.

15. Apparatus according to claim 1, **characterised in that** the receiving rollers (41) of the return transport table (42) are driven.

16. Apparatus according to claim 15, **characterised in that** there is provided a drive motor which drives both the rollers (31) of the transfer device (30) and the receiving rollers (41) of the return transport table (42).

## Revendications

1. Dispositif de transfert de pièces (10) usinées dans un poste d'usinage (20) du côté de sortie de ce dernier vers le côté de chargement de celui-ci ou vers un autre côté de chargement, comportant
- un dispositif de réception (30) pour la réception des pièces (10) sortant du côté de sortie du poste d'usinage (20),
- un dispositif de retour (40), par l'intermédiaire duquel les pièces (10) amenées par le dispositif de réception sont transportées en retour vers le côté de chargement du poste d'usinage (20) ou d'un autre poste d'usinage,
- ainsi qu'un dispositif de déplacement (60), avec lequel les pièces (10) sont transportées du dispositif de réception (30) sur le dispositif de retour (40),
**caractérisé en ce que**
le dispositif de réception (30) est constitué d'un nombre de rouleaux entraînés (31) disposés à un écartement prédéterminé les uns des autres, et orientés pour l'essentiel transversalement au sens du transport, et **en ce que** le dispositif de déplacement (60) est constitué d'un système de râteau dont les dents sont formées par au moins deux barres de soutien (61) pour les pièces (10), pouvant être déplacées vers le haut et vers le bas entre deux rouleaux (31) respectivement adjacents, ainsi qu'en va-et-vient dans la direction axiale des rouleaux, **en ce que** le dispositif de retour (40) comporte une table de transport de retour (42) pour la réception des pièces (10) du dispositif de déplacement (60), laquelle est constituée d'un nombre de rouleaux de réception (41) disposés à un écartement prédéterminé les uns des autres, et alignés avec les rouleaux (31) du dispositif de réception (30), et **en ce que** les barres de soutien (61) peuvent être abaissées entre les rouleaux de réception (41) de la table de transport de retour (42).

2. Dispositif selon la revendication 1, **caractérisé en ce que**, pour le déplacement vers le haut et vers le bas des barres de soutien (61), le dispositif de déplacement (60) comporte un dispositif de relevage (65) pneumatique ou hydraulique, avec lequel les pièces (10) peuvent être relevées du dispositif de réception (30) et abaissées sur le dispositif de retour (40).

3. Dispositif selon la revendication 1 ou 2, **caractérisé en ce que,** pour le déplacement en va-et-vient des barres de soutien (61) dans la direction axiale des rouleaux, le dispositif de déplacement (60) comporte un dispositif de transport linéaire pneumatique ou hydraulique, avec lequel les pièces (10) peuvent être déplacées transversalement du dispositif de réception (30) vers le dispositif de retour (40).

4. Dispositif selon la revendication 1 ou 2, **caractérisé en ce que**, pour le déplacement en va-et-vient des barres de soutien (61) dans la direction axiale des rouleaux, le dispositif de déplacement (60) comporte une transmission à manivelle (70), avec laquelle les pièces (10) peuvent être déplacées transversalement du dispositif de réception (30) vers le dispositif de retour (40).

5. Dispositif selon l'une quelconque des revendications 1 à 4, **caractérisé en ce que** le dispositif de déplacement (60) est synchronisé avec le dispositif de réception (30).

6. Dispositif selon la revendication 4 ou 5, **caractérisé en ce que** la transmission à manivelle (70) comporte un axe de rotation entraîné (72) sur lequel une manivelle (73) est montée en rotation, une extrémité libre (74) de la manivelle (73) agissant conjointement avec les barres de soutien (61) pour leur translation dans la direction axiale des rouleaux.

7. Dispositif selon la revendication 6, **caractérisé en ce que** l'extrémité libre (74) de la manivelle (73) est guidée dans un rail de roulement (75) pouvant coulisser dans la direction axiale des rouleaux.

8. Dispositif selon la revendication 7, **caractérisé en ce que** le rail de roulement (75) s'étend pour l'essentiel transversalement à la direction axiale des rouleaux, et est guidé de façon à pouvoir coulisser par deux rails de guidage (76) s'étendant sensiblement dans la direction axiale des rouleaux.

9. Dispositif selon la revendication 7 ou 8, **caractérisé en ce que** l'extrémité libre (74) de la manivelle (73) porte un galet (77), qui peut être déplacé dans le rail de roulement (75) dans la direction longitudinale.

10. Dispositif selon l'une quelconque des revendications 7 à 9, **caractérisé en ce que** le rail de roulement (75) comporte des barres trempées pour la réception de l'extrémité libre (74) de la manivelle (73), lesquelles sont notamment collées.

11. Dispositif selon l'une quelconque des revendications 1 à 10, **caractérisé en ce que** les barres de soutien (61) du système de râteau sont fixées sur un support de traverse (62), qui s'étend notamment transversalement aux barres de soutien (61).

12. Dispositif selon la revendication 11, **caractérisé en ce que** le dispositif de relevage (65) est en prise avec le support de traverse (62).

13. Dispositif selon la revendication 11 ou 12, **caractérisé en ce que** le dispositif de relevage (65) est fixé sur le rail de roulement (75).

14. Dispositif selon l'une quelconque des revendications 11 à 13, **caractérisé en ce que** les barres de soutien (61) sont espacées du support de traverse (62) dans la direction verticale.

15. Dispositif selon la revendication 1, **caractérisé en ce que** les rouleaux de réception (41) de la table de transport de retour (42) sont entraînés.

16. Dispositif selon la revendication 15, **caractérisé en ce qu'**il est prévu un moteur d'entraînement qui entraîne, aussi bien les rouleaux (31) du dispositif de réception (30) que les rouleaux de réception (41) de la table de transport de retour (42).
